# EUROPÄISCHE PATENTSCHRIFT

(11) **EP 1 144 240 B1**
(45) Veröffentlichungstag und Bekanntmachung des Hinweises auf die Patenterteilung: **06.11.2002**
(21) Anmeldenummer: 99963323.3
(22) Anmeldetag: 23.11.1999
(51) Int. Cl.: B62D 65/00

(54) **VERFAHREN UND VORRICHTUNG ZUM MONTIEREN EINER FAHRZEUGTÜR**
METHOD AND DEVICE FOR MOUNTING A VEHICLE DOOR
PROCEDE ET DISPOSITIF POUR MONTER UNE PORTIERE DE VEHICULE

(30) Priorität: 23.01.1999 DE 19902635
(43) Veröffentlichungstag der Anmeldung: 17.10.2001
(73) Patentinhaber: Bayerische Motoren Werke Aktiengesellschaft, 80809 München (DE)
(72) Erfinder: RHOADS, Scott, Moore, SC 29 365 (US); SCHMITT, Martin, D-94327 Bogen (DE); HÖGLINGER, Olaf, D-85521 Riemerling (DE)
(86) Internationale Anmeldenummer: EP9909013
(87) Internationale Veröffentlichungsnummer: WO00043256

(56) Entgegenhaltungen:
- US-A- 5 009 406
- US-A- 5 040 290
- US-A- 5 181 307

## Beschreibung

Die Erfindung bezieht sich auf ein Verfahren nach dem Oberbegriff des ersten und eine Vorrichtung zur Durchführung des Verfahrens nach dem Oberbegriff des vierten Anspruchs.

Um in der Montage von Kraftfahrzeugen die Seitentüren möglichst paßgenau und mit wenig Richtarbeiten anzubringen, sind eine Vielzahl von Verfahren bekannt.

Vorliegend sind nur die Verfahren von Interesse, die sich mit anschraubbaren Fahrzeugtüren beschäftigen. Hierbei ist es nämlich Voraussetzung, daß die Anschraubflächen der Scharniere und die entsprechenden Anlageflächen an der Fahrzeugkarosserie plan und spaltfrei aufeinander liegen. Bei anzuschweißenden Scharnieren ist dies nicht notwendig. Hier können Spalte zwischen den Scharnieren und den Anlageflächen an der Fahrzeugkarosserie vorhanden sein. Hervorgerufen sind diese durch Toleranzen zwischen der Karosserie und der Fahrzeugtür. Der Haltbarkeit der Schweißverbindung machen diese Spalte bis zu einer gewissen Breite keinen Abbruch.

Ein Verfahren zum Anschrauben einer Fahrzeugtür an eine Fahrzeugkarosserie ist aus der gattungsgemäßen DE 33 42 570 C bekannt. Hier wird die bereitgestellte Fahrzeugtür mit Hilfe eines Industrieroboters in eine entsprechende Türöffnung eingepaßt. Das Einpassen geschieht über Tastfinger und Meßköpfe mit Hilfe eines Rechners, der die Lage der Tür bestimmt. Auch muß ein spezielles dreiteiliges Scharnier verwendet werden, um dann die exakt ausgerichtete Tür anschrauben zu können.

Verfahren mit Meßköpfen und Rechnern sowie Robotern, die die Tür während des Anschraubvorganges halten, haben sich in der Praxis nur bedingt bewährt, da viele Fehlerquellen auftreten können und sehr aufwendige Berechnungsprogramme nötig sind.

Aufgabe der vorliegenden Erfindung ist es, das eingangs genannte Verfahren zu verbessern und es für den Einsatz in einer Montagelinie zu optimieren. Ebenfalls ist es Aufgabe der Erfindung, eine hierfür geeignete Vorrichtung vorzuschlagen.

Die Erfindung wird auf der verfahrenstechnischen Seite durch die Merkmale des ersten und auf der vorrichtungstechnischen Seite durch die Merkmale des vierten Anspruchs gelöst.

Die Lösung basiert auf der Erkenntnis, daß das Ausrichten der zu montierenden Fahrzeugtür mechanisch geschieht, ohne daß ein Rechner oder ein Industrieroboter zum Einpassen der Tür benötigt wird. Lediglich zum Transport der Fahrzeugtür aus einer Bereitstellung an den Montagerahmen kann ein Roboter verwendet werden. Dieser hat jedoch nicht die Aufgabe, die zu montierende Tür auszurichten und hierbei auch noch zu halten.

Durch den erfindungsgemäß vorgeschlagenen Anschraubvorgang kann mit mechanischen Mitteln eine Ausrichtung der Fahrzeugtür in der Türöffnung erzielt werden, wobei das Verfahren bevorzugt bei einer Fahrzeugkarosserie mit mindestens vier Türen Anwendung findet, da bei dem erfindungsgemäßen Verfahren sichergestellt werden kann, daß die beiden Türen einer Fahrzeugseite fluchten. Dieses Fluchten wird gemäß Anspruch 3 dadurch erreicht, daß für die vordere und hintere Tür einer Fahrzeugseite im Bereich der B-Säule die gleichen Ausrichtpunkte verwendet werden.

Die Lösung nach Anspruch 4 hat den Vorteil, daß sie mit rein mechanischen Bauteilen zum Ausrichten und Halten der positionierten Fahrzeugtür in der Türöffnung auskommt.

Die Unteransprüche 5 bis 14 beschreiben bevorzugte Ausführungsformen der Vorrichtung gemäß Anspruch 4, wobei Wert darauf gelegt wurde, daß sowohl der Montagerahmen an der Fahrzeugkarosserie als auch die einzelnen Träger für die Fahrzeugtüren jeweils spannungsfrei ausgerichtet werden können. Hierzu wurde jeweils darauf geachtet, daß drei Andockpunkte den Montagerahmen bzw. die einzelnen Träger in Fahrzeugbreitenrichtung (Y-Richtung), zwei Andockpunkte in Fahrzeughöhenrichtung (Z-Richtung) und ein Punkt in Fahrzeuglängsrichtung (X-Richtung) festlegt.

Ein weiterer Vorteil der Erfindung ist darin zu sehen, daß übliche anschraubbare Scharniere verwendet werden können, solange nur sichergestellt ist, daß die Anschraubflächen und damit die Scharnierflügel bei geschlossener Fahrzeugtür in etwa senkrecht zueinander verlaufen. Das Anschrauben selbst kann dann von Hand oder mittels Schraubrobotern erfolgen. Letzteres ist aber bekannt und wird deshalb nicht näher beschrieben.

Im folgenden wird die Erfindung anhand eines bevorzugten Ausführungsbeispiels näher beschreiben.

Es stellen dar
- Figur 1: eine perspektivische Ansicht der erfindungsgemäßen Türmontageanlage;
- Figur 2: eine Halteeinrichtung mit schwimmender Lagerung zwischen dem C-förmigen Rahmen und dem Montagerahmen;
- Figur 3: eine perspektivische Ansicht der Positioniereinrichtung und der vorderen Andockeinrichtung an der A-Säule;
- Figur 4: eine perspektivische Ansicht der Positioniereinrichtung und der hinteren Andockeinrichtung an der C-Säule;
- Figur 5: eine perspektivische Ansicht der Spanneinrichtungen im Bereich des Fahrzeug-Schwellers;
- Figur 6: eine perspektivische Ansicht der Spanneinrichtung am Scheibenrahmen;
- Figur 7: eine perspektivische Darstellung einer Andockeinrichtung für die träger von vorderer und hinterer Fahrzeugtür;
- Figur 8 und 9: schematisierte Ansichten der Aufnahmepunkte am hinteren Türträger;
- Figur 10: eine perspektivische Ansicht eines Aufnahmepunktes am vorderen Türträger.

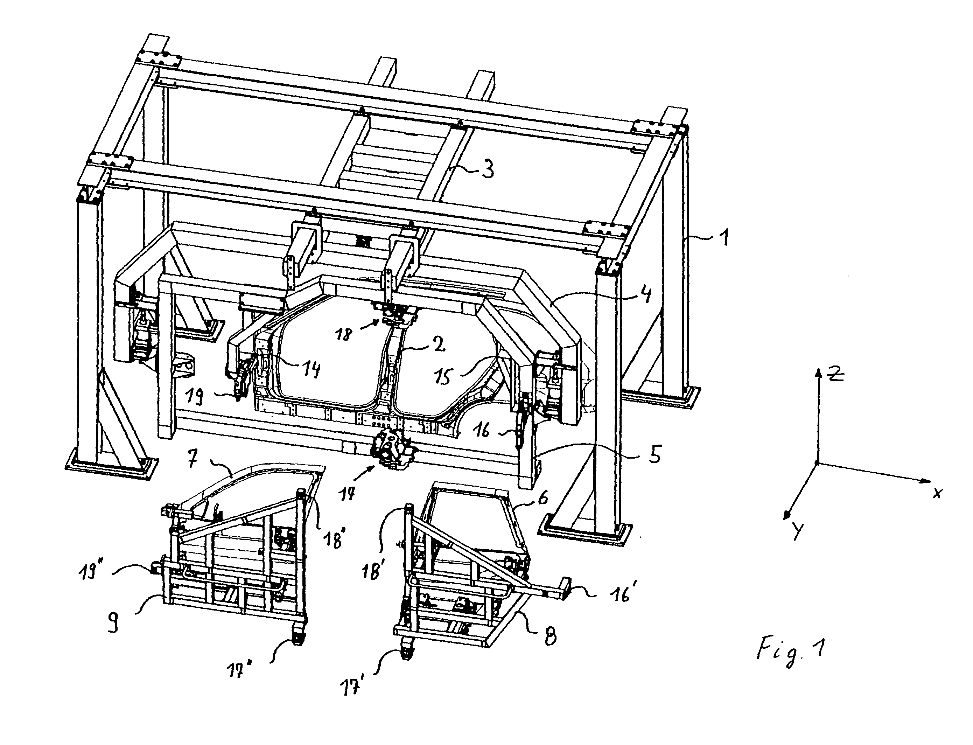

Die Anordnung gemäß Figur 1 besteht aus einem Gerüst 1, das tunnelartig eine nicht näher dargestellte Flurförderanlage überspannt, auf dem eine Fahrzeugkarosserie eines mindestens viertürigen Fahrzeuges transportiert wird. Die Seitenansicht eines derartigen Fahrzeuges ist schematisiert dargestellt und mit 2 bezeichnet.

An dem Gerüst 1 ist quer zur Transportrichtung des Fahrzeugs eine Trägereinheit 3 mit Verfahrschienen angeordnet, an der verfahrbar eine C-förmige Aufnahme 4 befestigt ist, in der ein Montagerahmen 5 einstellbar und schwimmend gelagert ist.

Die C-förmige Aufnahme 4 mit dem Montagerahmen 5 ist beidseitig der Fahrzeugkarosserie angeordnet und zwar in einem solchen Abstand (in der Ruheposition), daß eine Fahrzeugkarosserie problemlos zwischen die beiden C-förmigen Aufnahmen 4 eingefahren werden kann. Der Übersichtlichkeit halber ist in Figur 1 jedoch nur die C-förmige Aufnahme 4 mit dem Montagerahmen 5 für die linke Fahrzeugseite dargestellt. Die Anordnung für die rechte Fahrzeugseite ist spiegelbildlich aufgebaut und arbeitet genauso wie die Türmontagevorrichtung für die linke Seite.

Die zu montierenden Türen, nämlich die hintere Tür 6 und die vordere Tür 7 werden in entsprechenden Trägern 8 bzw. 9 seitlich außerhalb der Montagestation bereitgestellt. Die bereitgestellten Türen sind mit nicht näher dargestellten schraubbaren Scharnieren versehen, die in Sollposition angeschraubt sind.

Um den Montagerahmen 5 an die Karosserie anzukoppeln, sind weiter unten beschriebene und in Figur 1 nicht näher dargestellte Spanneinrichtungen 10, 11, 12 und 13 vorgesehen. Diese Spanneinrichtungen klammern den Montagerahmen 5 an die Fahrzeugkarosserie 2, wenn über Positioniereinrichtungen 14 und 15 eine Ausrichtung des Montagerahmens 5 an die Fahrzeugkarosserie stattgefunden hat.

Um den Träger 8 mit dem Montagerahmen 5 zu verbinden und somit die im Träger 8 gehaltene Tür 6 an der Karosserie auszurichten, sind die Andockeinrichtungen 16, 17 und 18 vorgesehen, die mit entsprechenden Aufnahmen 16', 17' und 18' am Träger 8 zusammenwirken.

Zum Befestigen der vorderen Tür 7, die im Träger 9 gehalten ist, an der Fahrzeugkarosserie dienen die Andockeinrichtungen 17, 18 und 19. Diese wirken zusammen mit den Aufnahmen 17", 18" und 19" an dem Träger 9.

Bevor die Türmontage im einzelnen beschrieben wird, werden die einzelnen, für die Montage wesentlichen Bauelemente näher erläutert.

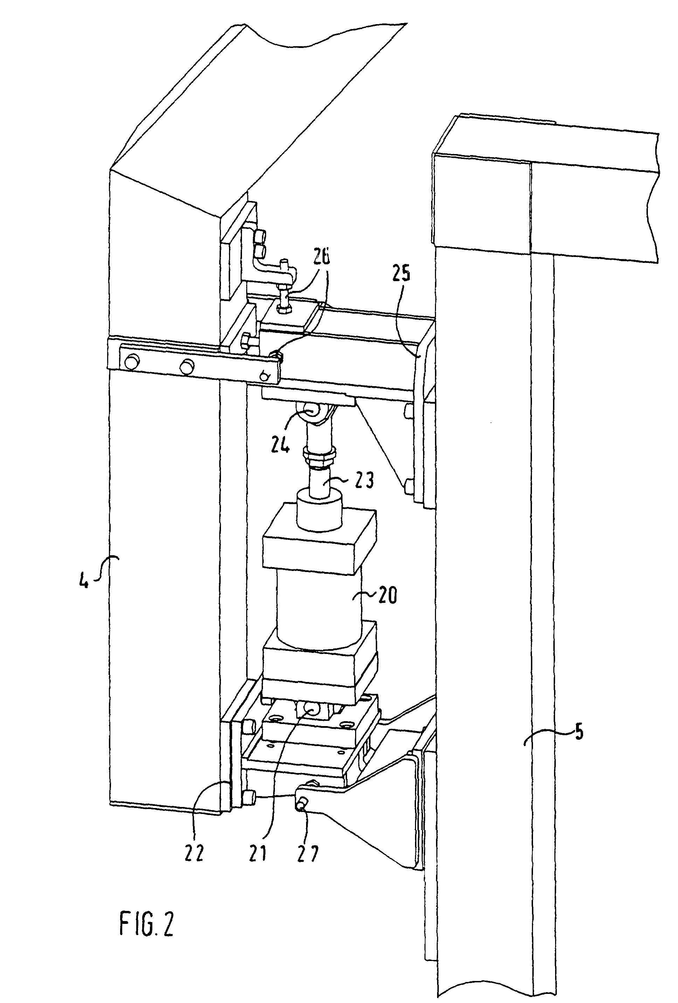

In Figur 2 ist die vordere (in Figur 1 linke) Halteeinrichtung zwischen der C-förmigen Aufnahme 4 und dem Montagerahmen 5 dargestellt. Die hintere (in Figur 1 rechte) Halteeinrichtung zwischen der C-förmigen Aufnahme und dem Montagerahmen ist analog aufgebaut.

Um zu erreichen, daß der Montagerahmen 5 zum Seitenrahmen 2 der Fahrzeugkarosserie ausgerichtet werden kann, ist er in Längs-, Höhen- und Breitenrichtung (bezogen auf die Fahrzeugkarosserie) beweglich gelagert.

Im wesentlichen besteht die Halteeinrichtung aus einem Zylinder-Kolben-Einheit 20, deren Zylinder über ein Gelenk 21 (Drehachse in Breitenrichtung der Fahrzeugkarosserie (Y-Richtung) liegend) an einem Flansch 22 an der C-förmigen Aufnahme 4 befestigt ist. Die Kolbenstange 23 der Zylinder-Kolben-Einheit ist über ein Kugelgelenk 24 mit einem Flansch 25 verbunden, der fest an dem Montagerahmen 5 angebracht ist.

Sowohl an dem Flansch 22 als auch an dem Flansch 25 greifen in allen drei Raumkoordinaten ausgerichtete Anschläge 26 bzw. 27 an, wobei die mit dem Flansch 22 zusammenwirkenden Anschläge 27 mit dem Montagerahmen 5 und die mit dem Flansch 25 zusammenwirkenden Anschläge 26 fest mit der C-förmigen Aufnahme 4 verbunden sind.

Aufgrund des Kugelgelenkes 24 und des Gelenkes 21 ist eine Beweglichkeit des Montagerahmens 5 in X- und Y-Richtung gewährleistet, während die Beweglichkeit in Z-Richtung über die fahrbare Kolbenstange 23 sichergestellt ist.

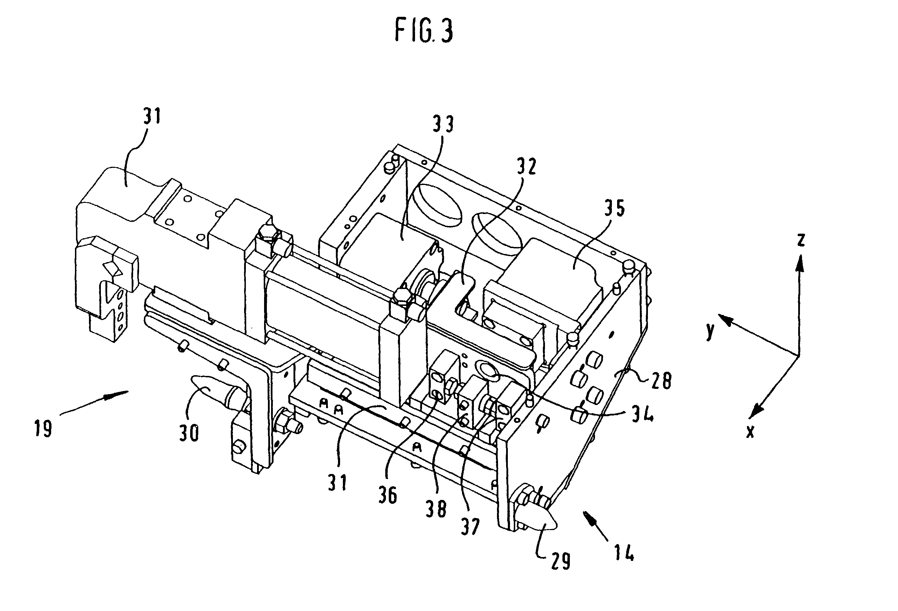

In Figur 3 ist die Positioniereinrichtung 14, die baulich mit dem Andockpunkt 19 in einem Gehäuse 28 zu einer Einheit zusammengefaßt ist, schematisiert dargestellt. Sie ist an dem Montagerahmen 5 befestigt.

Die Positioniereinrichtung 14 besteht aus einem fest angeordneten Zapfen 29.

Der Andockpunkt 19 besteht ebenfalls aus einem Zapfen 30, der allerdings verschiebbar in Y-Richtung gelagert ist. Hierzu ist er zusammen mit einer Spanneinrichtung 31 an einem im Gehäuse 28 verfahrbar gelagerten Schlitten 32 befestigt. Zum Verfahren dient ein Pneumatikzylinder 33, dessen Zylinder an dem Gehäuse 28 und dessen Kolben bzw. Kolbenstange mit dem Schlitten 32 verbunden ist.

An dem Schlitten 32 ist noch eine Zentrierbuchse 34 vorgesehen, in die ein nicht näher dargestellter, über einen Zylinder 35 bewegbarer Zentrierstift eingreifen kann.

Zum leichteren Einfahren des Zentrierstiftes in die Zentrierbuchse 34 dienen die beiden an dem Schlitten 32 angeordneten Anschläge 36 und 37, die mit einem am Gehäuse 28 befestigten Gegenanschlag 38 zusammenwirken

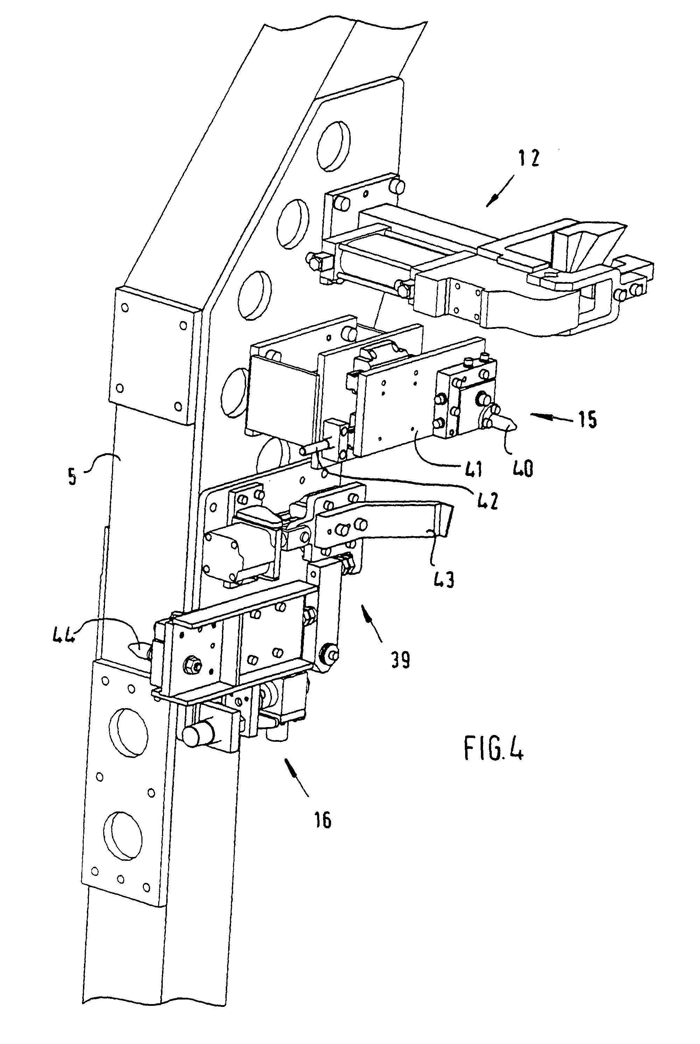

In Figur 4 ist zum einen die Spanneinrichtung 12 dargestellt und zum anderen die Positioniereinrichtung 15 sowie eine Längenausgleichseinrichtung 39. Alle drei Baueinheiten sind an dem Montagerahmen 5 befestigt.

Während die Spanneinrichtung 12 konventionell aufgebaut ist, besteht die Positioniereinrichtung 15 aus einem Zapfen 40, der an einem in X-Richtung beweglichen Schlitten 41 befestigt ist. Er wird über eine Konsole an dem Montagerahmen 5 gehalten. Zur Nullpunktfixieren dient ein handelsübliches einstellbares Federelement 42.

Die Längenausgleichseinrichtung 39 besteht aus einem Taster 43, der in X-Richtung längsverschiebbar gelagert ist. Er überträgt seine Verfahrbewegung über ein Getriebe auf einen weiteren Zentrierstift 44, der einen Teil der Andockpunkt 16 bildet. Eine derartige funktionsgleiche, konstruktiv aber anders ausgestaltete Anordnung ist näher beschrieben in der älteren, nicht vorveröffentlichten P 197 34 157.8

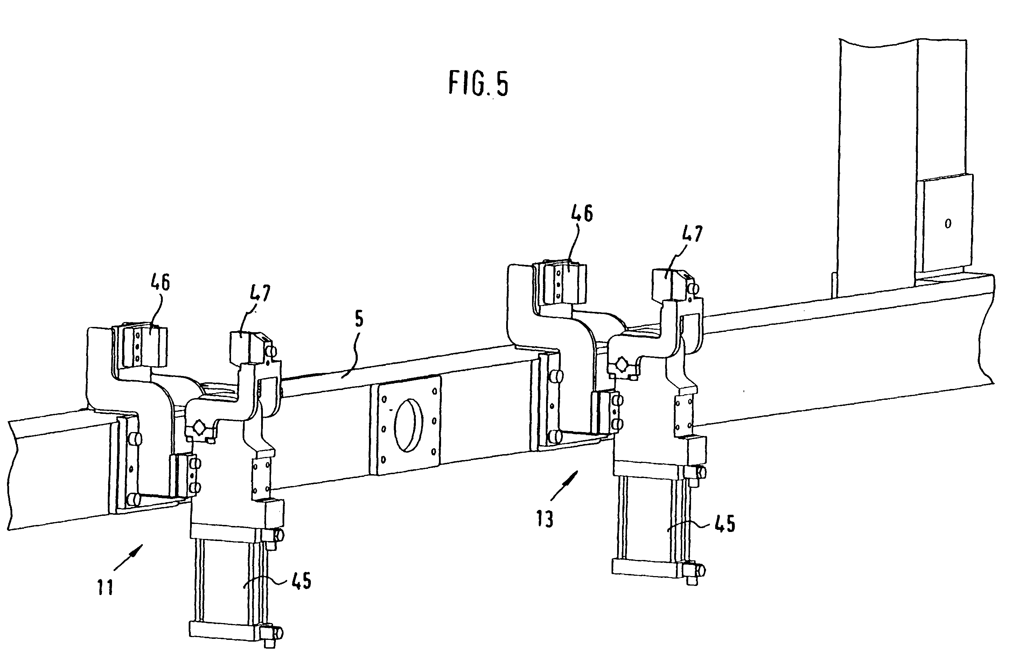

In Figur 5 sind die beiden Spanneinrichtungen 11 und 13 dargestellt, die einerseits fest an dem Montagerahmen 5 angeordnet sind und andererseits mit ihren Spannarmen von unten den Schweller der Fahrzeugkarosserie 2 umfassen. Die Spanneinrichtungen bestehen aus je einem Spannzylinder 45 konventioneller Bauart und je einer ortsfesten und je einer vom Spannzylinder bewegbaren Spannbacke 46 bzw. 47.

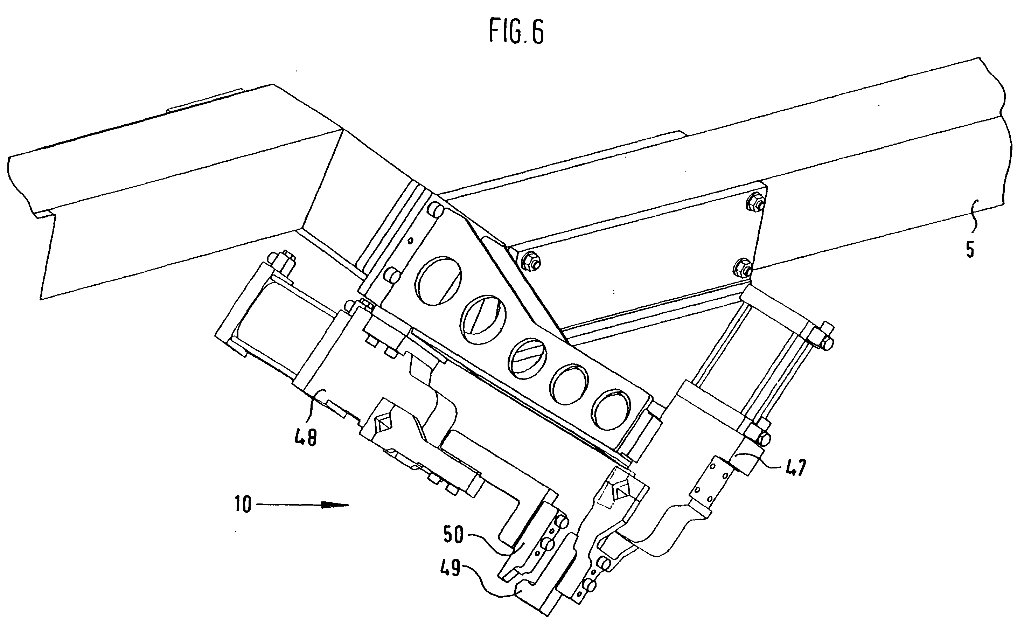

Figur 6 zeigt die Spanneinrichtung 10, die aus zwei über Pneumatikzylinder 47 und 48 betätigbaren Spannbacken 49 und 50 besteht. Beide Pneumatikzylinder sind fest an dem Montagerahmen 5 angeordnet. Die beiden Spannbacken greifen an der A-Säule im Bereich der seitlichen Fensteröffnung an.

Durch die Positioniereinrichtungen 14 und 15 und die vier Spanneinrichtungen 10 - 13 wird der Montagerahmen lagegenau zur Fahrzeugkarosserie 2 positioniert und gehalten. Dabei wirken die vier Spanneinrichtungen in Fahrzeugbreitenrichtung (Y-Achse), die beiden Zapfen 29, 40 jeweils in Fahrzeughöhenrichtung (Z-Achse) und der feste Zapfen 29 zusätzlich in Fahrzeuglängsrichtung (X-Achse).

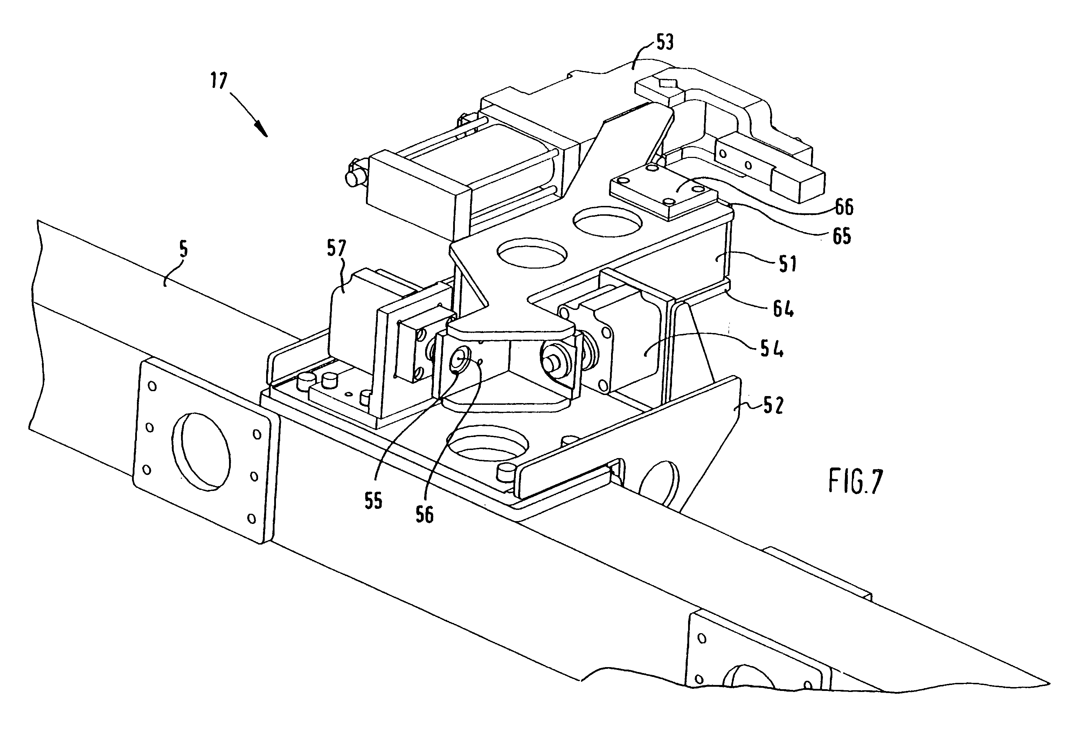

In Figur 7 ist der Andockpunkt 17 dargestellt, der aus einem Schlitten 51 besteht, der an einer Konsole 52, die fest mit dem Montagerahmen 5 verbunden ist, geführt wird

Der Schlitten 51 trägt eine Spanneinrichtung 53, die konventionell aufgebaut ist. In Y-Richtung verfahren wird der Schlitten 51 von einem Pneumatikzylinder 54. Zum Zentrieren des Schlittens 51 in Y-Richtung dient eine Zentrierbuchse 55 an dem Schlitten 51, in die ein Zentrierstift 56 eingreifen kann, der von einem weiteren Pneumatikzylinder 57 bewegt wird.

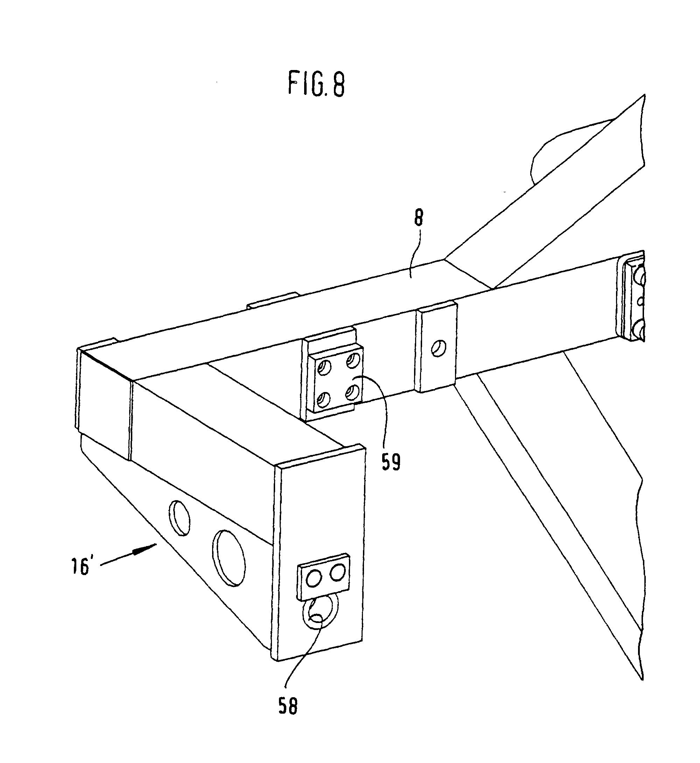

Die Figuren 8 bis 10 zeigen die mit den Andockpunkten 16 bis 19 an dem Montagerahmen zusammenwirkenden Andockpunkte an dem Träger 8 bzw. an dem Träger 9.

In Figur 8 ist die Aufnahme 16' an dem Träger 8 dargestellt. Sie besteht aus einer Zentrierbuchse 58, die mit dem Zentrierstift 44 (Figur 4) der Längenausgleichseinrichtung 39 zusammenwirkt.

Weiterhin ist in Figur 8 die Aufnahmefläche 59 dargestellt, die mit einer in Figur 4 nicht gezeigten Spanneinrichtung in dem Andockpunkt 16 zusammenwirkt.

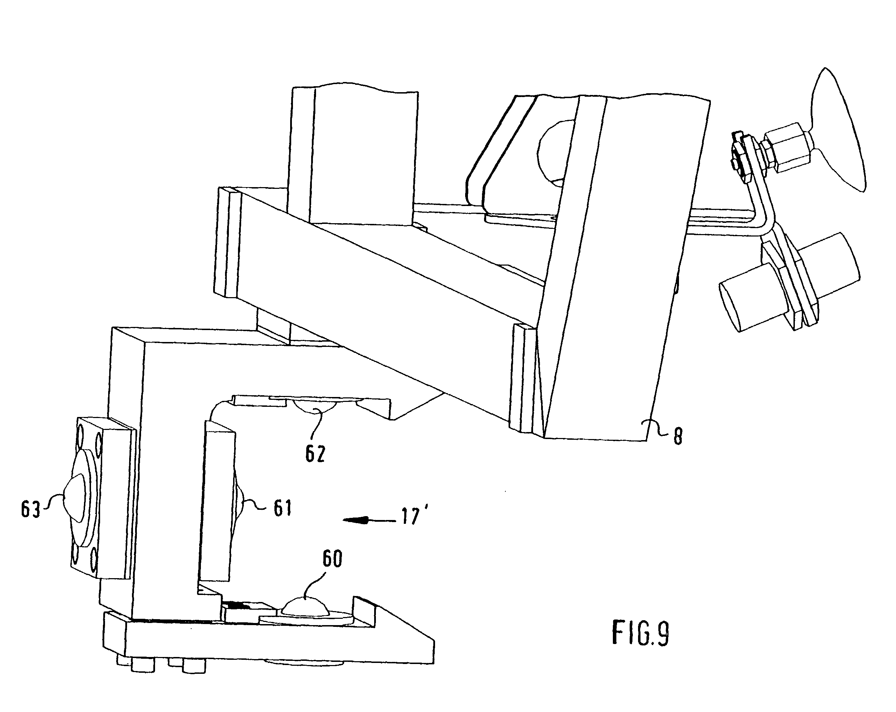

Figur 9 zeigt die Aufnahmen 60 bis 63 der Aufnahme 17', die mit der Andockpunkt 17 zusammenwirkt. Die Aufnahmen 60, 61 und 62 sind jeweils an einem Schenkel eines U angeordnet und greifen an entsprechend angeordneten Gegenauflageflächen 64 bis 66 am Schlitten 51 (Figur 7) der Andockpunkt 17 an.

Die Spanneinrichtung 53 aus Figur 7 wirkt mit ihrer beweglichen Spannbacke auf die Aufnahme 63. Damit ist eine Festlegung in Z- und Y-Richtung gewährleistet.

Zur Vermeidung von Verkanten/Blockieren beim Andocken der Aufnahmen 60 und 62 auf die Gegenauflageflächen 64 und 66 sind die Aufnahmen 60 und 62 mit drehbar gelagerten Kugeln ausgerüstet, so daß an den entsprechenden Gegenauflageflächen nur punktförmige Berührungen stattfinden. Die gleiche Anordnung von Kugeln weisen die beiden Aufnahmen 61 und 63 auf.

Der Andockpunkt 18 ist identisch mit der Andockpunkt 17 aufgebaut und wird deshalb nicht näher erläutert. Allerdings weist die Aufnahme 18' keine Festlegung in Fahrzeughöhenrichtung auf, es fehlen also die entsprechenden Aufnahmen 60 und 62.

Auch gilt wieder, daß drei Andockpunkte den Träger 8 in Fahrzeugbreitenrichtung (Y-Achse), nämlich die Aufnahmeflächen 59 und 61 sowie die entsprechende Auflagefläche des Andockpunktes 18, daß zwei Andockpunkte den Träger 8 in Fahrzeughöhenrichtung (Z-Achse), nämlich die Aufnahmen 60 und 62 und die Zentrierbuchse 58, und daß ein Andockpunkt den Träger 8 in Fahrzeuglängsrichtung (X-Achse) festlegt, nämlich die Zentrierbuchse 58.

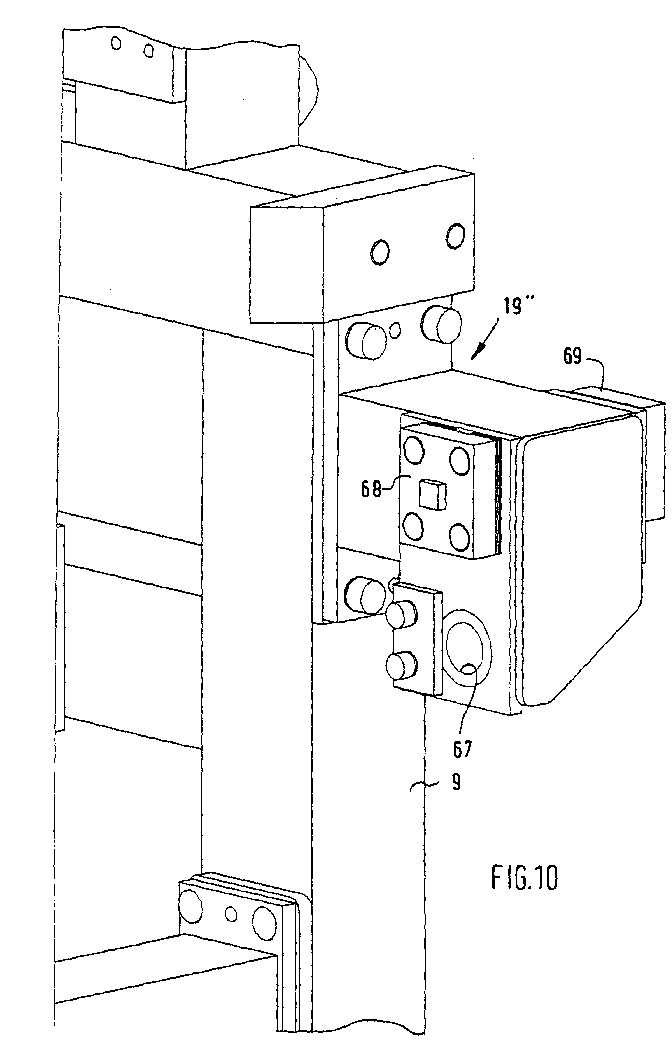

Figur 10 zeigt die Aufnahme 19" an dem Träger 9, die mit der Andockpunkt 19 (Figur 1, 3) zusammenwirkt.

Die Aufnahme 19" besteht aus einer Zentrierbuchse 67, die mit dem Zentrierstift 30 aus Figur 3 zusammenwirkt. Weiterhin sind an der Aufnahme 19" zwei Anlageflächen 68 und 69 vorhanden, die mit der Spanneinrichtung 30 aus Figur 3 zusammenwirken.

Auch hier legen wieder drei Andockpunkte den Träger 9 in der Fahrzeugbreitenrichtung, zwei in der Fahrzeughöhenrichtung und ein Andockpunkt den Träger 9 in Fahrzeuglängsrichtung fest.

Im folgenden wird ein vollständiger Montagevorgang für eine linke hintere und linke vordere Tür anhand der Figuren näher erläutert. Voraussetzung zur Anwendung der in den Figuren beschriebenen erfindungsgemäßen Ausgestaltung der Montagevorrichtung ist es, daß im Bereich der A- und C-Säule eine Referenzöffnung vorhanden ist. Üblicherweise wird diese Referenzöffnung in die Seitenwand beim Stanzen der Seitenwand hergestellt.

Weiterhin ist es Voraussetzung, daß die Türscharniere türseitig und fahrzeugseitig an der A- bzw. B-Säule angeschraubt werden und ihre Anschraubflächen an der entsprechenden Tür bei geschlossener Tür senkrecht zueinander verlaufen. Die Türen werden mit in Sollposition angeschraubten und ausgerichteten Türscharnieren angeliefert.

Ausgangspunkt für den Montagevorgang ist eine relativ zu dem Gerüst 1 positionierte Fahrzeugkarosserie, die grob ausgerichtet ist zu den beiden Montagerahmen 5. Beide Montagerahmen 5 sind in ihrer Ausgangsposition mit Abstand zu der Fahrzeugkarosserie angeordnet.

Außerhalb der Montagerahmens 5 sind jeweils die beiden Träger 8 und 9 mit je einer entsprechenden Tür angeordnet.

Sobald die Fahrzeugkarosserie positioniert ist, wird die C-förmige Aufnahme 4 in Richtung auf ihre Seitenwand bewegt. Gestoppt wird diese Bewegung durch einen nicht näher dargestellten mechanischen Anschlag in der Trägereinheit 3. Bei dieser Anfahrbewegung der C-förmigen Aufnahme 4 an die Seitenwand gelangen die Zapfen 29 und 40 in die entsprechenden Referenzöffnungen in der Seitenwand. Da der Zapfen 29 fest mit dem Montagerahmen 5 verbunden ist, wird durch sein Eintauchen in die Referenzöffnung der Montagerahmen 5 in X- und Z-Richtung festgelegt.

Eine Längendifferenz in X-Richtung zwischen den beiden Referenzöffnung gleicht der Zapfen 40 dadurch aus, daß er auf dem Schlitten 41 in X-Richtung beweglich gelagert ist. Damit legt der Zapfen 41 den hinteren Teil des Montagerahmens nur in Z-Richtung fest.

Aufgrund der beweglichen Lagerung des Montagerahmens 5 an der C-förmigen Aufnahme 4 kann der Montagerahmen 5 auch mit Hilfe der Zapfen 29 und 40 gegenüber der C-förmigen Aufnahme 4 in X- und Z-Richtung ausgerichtet werden. Die bewegliche Lagerung des Montagerahmens 5 wird druch die in Figur 2 gezeigte Lagerung erzielt,da sie eine Bewegung des Montagerahmens in allen Richtungen zuläßt. Möglich ist dies durch das Luftpolster im Zylinder 20, auf dem der Montagerahmen "schwimmt".

Anschließend schließen die Spanneinrichtungen 10 bis 13, womit der Montagerahmen 5 fest mit dem Seitenrahmen der Fahrzeugkarosserie verbunden ist. Somit ist sichergestellt, daß der Montagerahmen 5 genau zur Seitenwand der Fahrzeugkarosserie ausgerichtet ist, so daß die nunmehr zu montierenden Türen über diesen Montagerahmen 5 entsprechend der Lage des Seitenrahmens ausgerichtet werden können.

Bevor die eigentliche Montage der Türen beginnt, wird nach dem Spannen der Spanneinrichtungen 10 bis 13 der Taster 43 der Längenausgleichseinrichtung aus seiner bisherigen Warteposition in X-Richtung soweit nach hinten verfahren, bis er Kontakt zum Seitenrahmen erhält. Aufgrund der Übersetzung wird diese Verfahrbewegung nicht 1:1 auf den Zentrierstift 44 übertragen, sondern beispielsweise im Verhältnis 2:1, d.h., der Verfahrweg des Tasters 43 wird nur zur Hälfte an den Verfahrweg des Zentrierstiftes 44 weitergegeben.

Diese Längenausgleichseinrichtung hat die Aufgabe, sicherzustellen, daß die senkrechten Spalte der hinteren Tür sowohl zur C-Säule und als auch zur Kante der Vordertür gleich groß sind, auch wenn die hintere Türöffnung vom Soll-Maß abweicht.

Diese Längenausgleichsvorrichtung stellt eine Arbeitserleichterung dar. Selbstverständlich kann die hintere Tür auch nach der Montage der Türen von Hand in X-Richtung eingepaßt werden. In diesem Fall ist dann der Zentrierstift 44 fest an dem Montagerahmen 5 angeordnet.

Nachdem der Zentrierstift 44 ausgerichtet wurde, wird der Träger 8 von einem Werker oder einem Industrieroboter in Richtung auf den Montagerahmen 5 bewegt und zwar derart, daß die entsprechenden Andockpunkte des Montagerahmens 5 und des Trägers 8 in Kontakt gelangen. Hierzu sind selbstverständlich die Spanner in den Andockpunkten 16 bis 18 geöffnet, so daß der im Raum ausgerichtete Träger 8 in Y-Richtung an den Montagerahmen 5 herangefahren werden kann.

Durch das Einfahren des Zentrierstiftes 44 in die Buchse 58 der Aufnahme 16' wird der Träger 8 und damit die hintere Tür in X- und Z-Richtung festgelegt. Das vordere untere Ende des Trägers 8 wird über die Aufnahme 17' und die dort vorhandenen Auflageflächen 60 bis 62 an der Andockpunkt 17 an den Gegenaufnahmen 64 bis 66 in Y- und Z-Richtung festgelegt.

Bei der Aufnahme 18 bzw. 18' wird eine Festlegung in Y-Richtung erreicht, da hier nur eine einfache Spanneinrichtung vorgesehen ist.

Sobald die entsprechenden Spanner bei den Andockpunkten 16 bis 18 geschlossen sind, ist der Träger 8 spannungsfrei mit dem Montagerahmen 5 verbunden und festgehalten.

Anschließend wird der fest gespannte Träger 8 von den Andockpunkten 17 und 18 über die Schlitten 51 und die Pneumatikzylinder 54 in Y-Richtung verfahren, bis die Scharniere an den entsprechenden Auflageflächen an der B-Säule anliegen. Sodann werden die Scharniere mit der B-Säule verschraubt. Dadurch ist die Tür in X-und Z-Richtung fixiert.

In einem weiteren Arbeitsvorgang wird dann die türseitige Verschraubung gelöst. Daraufhin werden die Schlitten 51 der Andockpunkte 17 und 18 in Y-Richtung durch Eingreifen der Zentrierstifte 56 in die Zentrierbuchsen 55 auf Sollposition verfahren. Hierzu weisen dieZentrierstifte 56 ausreichend große Fasen auf, so daß die Schlitten beim Einfahren der Zentrierstifte verschoben werden. Gleiches passiert an dem oberen Andockpunkt 18.

Dadurch wird die Tür in Y-Richtung in Soll-Position gebracht, so daß die türseitigen Scharnierhälften wieder festgezogen werden können. Somit ist die hintere Tür lagegenau in die entsprechende Türöffnung der Seitenwand eingepaßt, wobei gleichzeitig sichergestellt wurde, daß der senkrechte Spalt an der C-Säule in seiner Breite dem Spalte mit der noch zu montierenden vorderen Tür entspricht und daß Toleranzen uns Setzprozesse im Seitenrahmen und in der Tür in allen Richtungen ausgeglichen wurden.

Zum Montieren der vorderen Tür muß zuerst der Träger 8 vom Montagerahmen 5 gelöst werden, indem die Spanneinrichtungen der Andockpunkte 16 - 18 gelöst werden. Dies ist notwendig, da die Andockpunkte 17 und 18 auch für den Träger 9 verwendet werden.

Sobald der Träger 8 in seiner Warteposition angelangt ist, wird der Träger 9 mit den Andockpunkten 17, 18 und 19 in Kontakt gebracht. Die Spanneinrichtungen der Andockpunkte 17 und 18 sind hierbei in ihrer ausgerichteten Position aus dem Anschraubvorgang der hinteren Tür stehengeblieben. Die Aufnahme 17" ist entsprechend der Aufnahme 17' und die Aufnahme 18" ist entsprechend der Aufnahme 18' ausgebildet.

Nach dem Anfahren des Trägers 9 mit seinen Aufnahmen an die entsprechenden Andockpunktpunkte des Montagerahmens 5 werden die entsprechenden Spanner wieder geschlossen.

Anschließend wird über die Antriebseinrichtung 33 der Schlitten 32 in Y-Richtung solange verfahren, bis die Scharniere der vorderen Tür an den entsprechenden Auflageflächen der A-Säule anliegen.

Sobald die Scharniere an der A-Säule anliegen, werden sie angeschraubt. Damit ist die vordere Tür in X- und Z-Richtung fest zur Karosserie ausgerichtet. Durch das anschließende Lösen der türseitigen Verschraubung und das Eingreifen des Zentrierstiftes in die Zentrierbuchse 34 wird die Tür in Y-Richtung ausgerichtet. Nachdem der Zentrierstift in die Zentrierbuchse 34 eingefahren ist, wird die türseitige Verschraubung wieder festgezogen.

Aufgrund der Tatsache, daß die Spanneinrichtungen der Andockpunkte 17 und 18 in ihrer Position verharrt sind und diese Andockpunkte auch für die hintere Kante der vorderen Tür zur Justierung herangezogen werden, fluchtet die vordere Tür mit der hinteren Tür, so daß kein Versatz gegeben ist.

Nach dem Lösen der Spanneinrichtungen der Andockpunkte 17, 18 und 19 kann der Träger 9 wieder von dem Montagerahmen 5 entfernt werden und in Warteposition gebracht werden.

Anschließend werden die Spanneinrichtungen 10 bis 13 gelöst, so daß der Montagerahmen 5 von der Seitenwand nach außen weggefahren werden kann.

Auf der rechten Fahrzeugseite ist der gleiche Vorgang für die vordere rechte und hintere rechte Tür abgelaufen, so daß die nun mit Türen ausgestattete Fahrzeugkarosserie aus dem Gerüst 1 fortgefahren werden kann zu einer nächsten Bearbeitungsstation.

## Patentansprüche

1. Verfahren zum Montieren einer Fahrzeugtür an eine Fahrzeugkarosserie, die über anschraubbare Scharniere befestigt wird, wobei die Anschraubflächen bei geschlossener Fahrzeugtür im wesentlichen senkrecht zueinander verlaufen,
**dadurch gekennzeichnet, daß** die Fahrzeugtür mit in Sollposition angeschraubten Scharnieren in Richtung zweier Fahrzeugachsen ausgerichtet in die entsprechende Türöffnung positioniert und an die karosserieseitigen Anschraubflächen angeschraubt wird, daß anschließend die türseitige Verschraubung gelöst und die Fahrzeugtür in Richtung der dritten Fahrzeugachse ausgerichtet wird und daß dann die türseitige Verschraubung wieder festgezogen wird.

2. Verfahren nach Anspruch 1,
**dadurch gekennzeichnet, daß** bei einer viertürigen Fahrzeugkarosserie zuerst die hinteren und dann erst die vorderen Fahrzeugtüren angeschraubt werden.

3. Verfahren nach Anspruch 2,
**dadurch gekennzeichnet, daß** an der Seitenwand der Fahrzeugkarosserie ein Montagerahmen positioniert und angekoppelt wird, daß jede Fahrzeugtür über je einen Träger gehalten wird, daß der Montagerahmen einstellbare Aufnahmen für die Träger aufweist, wobei die - in Fahrzeuglängsrichtung gesehen - vorderen Aufnahmen für den Träger der hinteren Fahrzeugtür gleichzeitig als hintere Aufnahmen für den Träger der vorderen Fahrzeug benutzt werden.

4. Vorrichtung zum Durchführen des Verfahrens gemäß Anspruch 1, bestehend aus einem Rahmen zur Aufnahme einer zu montierenden Fahrzeugtür, die mit in Sollposition angeschraubten Scharnieren über den Träger in die entsprechende Türöffnung positionierbar ist,
**dadurch gekennzeichnet, daß** ein Montagerahmen (5) vorgesehen ist, der über Positionier- (14, 15) und Halteeinrichtungen (10 bis 13) an der Seitenwand (2) der Fahrzeugkarosserie positionierbar und andockbar ist, und daß der Montagerahmen (5) einstellbare Aufnahmen (16, 17, 18) zum Positionieren des Trägers (8, 9) der Fahrzeugtür (6, 7) aufweist.

5. Vorrichtung nach Anspruch 4,
**dadurch gekennzeichnet, daß** der Montagerahmen (5) in einer C-förmigen Aufnahme (4) über zwei Halteeinrichtungen einstellbar und schwimmend gehalten ist.

6. Vorrichtung nach Anspruch 5,
**dadurch gekennzeichnet, daß** die Halteeinrichtung aus einer Zylinder-Kolben-Einheit (20) besteht, wobei der Zylinder drehbar an der C-förmigen Aufnahme und die Kolbenstange (23) über ein Kugelgelenk (24) an dem Montagerahmen (5) befestigt ist.

7. Vorrichtung nach einer der vorangegangenen Ansprüche,
**dadurch gekennzeichnet, daß** je eine Positioniereinrichtung (14, 15) auf der Höhe der A-Säule und C-Säule vorgesehen ist, wobei jede Positioniereinrichtung (14, 15) aus einem Zapfen (29, 40) besteht, der in eine Referenzöffnung in der Seitenwand (2) eingreift.

8. Vorrichtung nach einem der vorangegangenen Ansprüche,
**dadurch gekennzeichnet, daß** der Zapfen (40) der Positioniereinrichtung (15) für die C-Säule in Fahrzeuglängsrichtung verschiebbar gelagert ist.

9. Vorrichtung nach einem der vorangegangenen Ansprüche,
**dadurch gekennzeichnet, daß** der Montagerahmen (5) über vier Spanneinrichtungen (10 bis 13) an dem Seitenrahmen (2) der Karosserie andockbar ist.

10. Vorrichtung nach einem der vorangegangenen Ansprüche,
**dadurch gekennzeichnet, daß** die Träger (8, 9) für die zu montierenden Fahrzeugtüren (6, 7) über je drei Andockpunkte (16, 17, 18 bzw, 18, 19, 20) mit dem Montagerahmen (5) verbindbar sind.

11. Vorrichtung nach einem der vorangegangenen Ansprüche,
**dadurch gekennzeichnet, daß** jeder Andockpunkt eine Spanneinrichtung aufweist.

12. Vorrichtung nach einem der vorangegangenen Ansprüche,
**dadurch gekennzeichnet, daß** für die hintere Fahrzeugtür (6) ein Andockpunk t(16) auf Höhe der C-Säule und zwei Andockpunkte (17, 18) auf Höhe der B-Säule vorgesehen sind, wobei die beiden Andockpunkte (17, 18) auf Höhe der B-Säule an der Türöffnung oben und unten angeordnet sind.

13. Vorrichtung nach einem der vorangegangenen Ansprüche,
**dadurch gekennzeichnet, daß** die Spanneinrichtungen an den Andockpunkten auf Höhe der B-Säule in Fahrzeugbreite verschiebbar auf einem Schlitten vorgesehen sind.

14. Vorrichtung nach einem der vorangegangenen Ansprüche,
**dadurch gekennzeichnet, daß** für die vordere Fahrzeugtür (7) ein Andockpunkt (19) auf Höhe der A-Säule vorgesehen ist, dessen Spanneinrichtung in Fahrzeugbreite verschiebbar auf einem Schlitten gelagert ist.

## Claims

1. A method of fitting a door on a vehicle body, the door being fastened via screwable hinges and the screwing surfaces extending substantially at right angles to one another when the vehicle door is closed,
**characterised in that** the door, aligned in the direction of two axes of the vehicle with the hinges screwed in the set position, is positioned in the appropriate door opening and screwed to the screwing surfaces on the body, after which the screws on the door are loosened and the door is aligned in the direction of the third axis of the vehicle, after which the screws on the door are re-tightened.

2. A method according to claim 1,
**characterised in that** in the case of a four-door vehicle body, the rear doors are screwed first, followed by the front doors.

3. A method according to claim 2,
**characterised in that** an assembly frame is coupled to the side wall of the body, each door is held by a separate carrier, and the assembly frame has adjustable holders for the carriers, wherein the front holders, as seen in the longitudinal direction of the vehicle, for the carrier of the rear door are also used as rear holders for the carrier of the front door.

4. A device for working the method according to claim 1, comprising a frame for holding a vehicle door for fitting, the door being positionable by the carrier in the appropriate door opening, by means of hinges which are screwed on in the set position,
**characterised in that** an assembly frame (5) is provided and can be docked and positioned on the side wall (2) of the body via positioning devices (14, 15) and retaining devices (10 to 13), and the assembly frame (5) comprises adjustable holders (16, 17, 18) for positioning the carrier (8, 9) of the door (6, 7).

5. A device according to claim 4,
**characterised in that** the assembly frame (5) is held adjustably and in floating manner by two retaining devices in a C-shaped holder (4).

6. A device according to claim 5,
**characterised in that** the retaining device comprises a cylinder-piston unit (20), wherein the cylinder is rotatably fastened to the C-shaped holder and the piston rod (23) is fastened via a ball joint (24) to the assembly frame (5).

7. A device according to any of the preceding claims,
**characterised in that** a positioning device (14, 15) is provided at the level of the A-column and the C-column respectively, wherein each positioning device (14, 15) comprises a plug (29, 40) which engages in a reference opening in the side wall (2).

8. A device according to any of the preceding claims,
**characterised in that** the plug (40) of the positioning device (15) for the C-column is mounted so as to be movable in the longitudinal direction of the vehicle.

9. A device according to any of the preceding claims,
**characterised in that** the assembly frame (5) can be docked against the side frame (2) of the body via four clamping devices (10 to 13).

10. A device according to any of the preceding claims,
**characterised in that** the carriers (8, 9) for the doors (6, 7) for fitting are each connectable to the assembly frame (5) via three respective docking points (16, 17, 18 and 18, 19, 20).

11. A device according to any of the preceding claims,
**characterised in that** each docking point comprises a clamping device.

12. A device according to any of the preceding claims,
**characterised in that** a docking point (16) at the level of the C-column and two docking points (17, 18) at the level of the B-column are provided for the rear door (6), wherein the two docking points (17, 18) are disposed at the level of the B-column at the top and bottom of the door opening.

13. A device according to any of the preceding claims,
**characterised in that** the clamping devices at the docking points at the level of the B-column are movable on a slide across the vehicle.

14. A device according to any of the preceding claims,
**characterised in that** a docking point (19) at the level of the A-column is provided for the front door (7) and its clamping device is movable on a slide across the vehicle.

## Revendications

1. Procédé de montage d'une portière de véhicule sur une carrosserie de véhicule, cette portière étant fixée par des charnières vissées, les surfaces de vissage étant essentiellement perpendiculaires l'une à l'autre lorsque la portière est fermée,
**caractérisé en ce qu'**
on aligne la portière du véhicule dans la direction de deux axes du véhicule, les charnières étant vissées en position de consigne, on positionne la portière dans l'ouverture de porte correspondante et on la visse aux surfaces de vissage de la carrosserie,
ensuite on desserre les vis du côté de la portière et on aligne la portière en direction du troisième axe du véhicule puis on serre de nouveau les vis du côté de la portière.

2. Procédé selon la revendication 1,
**caractérisé en ce que**
dans le cas d'une carrosserie de véhicule à quatre portes, on visse d'abord les portières arrière puis seulement les portières avant.

3. Procédé selon la revendication 2,
**caractérisé en ce qu'**
on positionne un châssis de montage contre la paroi latérale de la carrosserie du véhicule et on couple celui-ci,
on maintient chaque portière par un support
le châssis de montage comporte des moyens de réception réglables pour les supports, les moyens de réception avant (vus dans la direction longitudinale du véhicule) pour les supports des portières arrière étant utilisés en même temps que les moyens de réception arrière des supports des portières avant.

4. Dispositif pour la mise en oeuvre du procédé selon la revendication 1, composé d'un cadre pour recevoir une portière à monter, qui se positionne avec des charnières vissées en position de consigne, par le support dans l'ouverture de porte correspondante,
**caractérisé par**
un cadre de montage (5) qui peut être positionné et fixé par des installations de positionnement (14, 15) et des installations de serrage (10-13) entre la paroi latérale (2) de la carrosserie du véhicule et
le cadre de montage (5), comporte des moyens de réception réglables (16, 17, 18) pour positionner le support (8, 9) de la portière (6, 7).

5. Dispositif selon la revendication 4,
**caractérisé en ce que**
le cadre de montage (5) est tenu dans un moyen de réception (4) en forme de C de manière réglable et flottante par deux installations de fixation.

6. Dispositif selon la revendication 5,
**caractérisé en ce que**
l'installation de fixation se compose d'un ensemble cylindre/piston (20), le cylindre étant fixé à rotation sur le moyen de réception en forme de C et la tige de piston (23) est fixée par une articulation à rotule (24) au cadre de montage (5).

7. Dispositif selon l'une quelconque des revendications précédentes,
**caractérisé en ce que**
chaque installation de positionnement (14, 15) est prévue à la hauteur de la colonne A et de la colonne C, chaque installation de positionnement (14, 15) se composant d'une broche (29, 40) pénétrant dans une ouverture de référence de la paroi latérale (2).

8. Dispositif selon l'une quelconque des revendications précédentes,
**caractérisé en ce que**
la broche (40) de l'installation de positionnement (15) pour la colonne C peut coulisser dans la direction longitudinale du véhicule.

9. Dispositif selon l'une quelconque des revendications précédentes,
**caractérisé en ce que**
le cadre de montage (5) peut être fixé au cadre latéral (2) de la carrosserie par quatre installations de serrage (10-13).

10. Dispositif selon l'une quelconque des revendications précédentes,
**caractérisé en ce que**
les supports (8, 9) pour les portières de véhicule (6, 7) à monter sont reliés par chaque fois trois points d'accrochage (16, 17, 18 ou 18, 19, 20) au cadre de montage (5).

11. Dispositif selon l'une quelconque des revendications précédentes,
**caractérisé en ce que**
chaque point d'accrochage présente une installation de serrage.

12. Dispositif selon l'une quelconque des revendications précédentes,
**caractérisé en ce que**
pour la portière arrière (6) il est prévu un point d'accrochage (16) à la hauteur de la colonne C et deux points d'accrochage (17, 18) à la hauteur de la colonne (B), les deux points d'accrochage (17, 18) à la hauteur de la colonne B se trouvant dans l'ouverture de la porte, en haut et en bas.

13. Dispositif selon l'une quelconque des revendications précédentes,
**caractérisé en ce que**
les installations de serrage des points d'accrochage à la hauteur de la colonne B sont coulissantes sur un chariot dans le sens de la largeur du véhicule.

14. Dispositif selon l'une quelconque des revendications précédentes,
**caractérisé en ce que**
pour la portière avant (7) il est prévu un point d'accrochage (19) à hauteur de la colonne A dont l'installation de serrage est montée coulissante sur un chariot dans le sens de la largeur du véhicule.
